# FASCICULE DE BREVET EUROPEEN

(11) **EP 1 145 522 B1**
(45) Date de publication et mention de la délivrance du brevet: **17.10.2007**
(21) Numéro de dépôt: 00964360.2
(22) Date de dépôt: 25.09.2000
(51) Int. Cl.: H04L 29/06

(54) **PROCEDE ET ARCHITECTURE DE PILOTAGE A DISTANCE D'UNE STATION D'UTILISATEUR VIA UN RESEAU DE TYPE INTERNET**
VERFAHREN UND ARCHITEKTUR ZUR FERNSTEUERUNG VON EINER BENUTZERSTATION ÜBER INTERNET
METHOD AND ARCHITECTURE FOR REMOTE MONITORING OF A USER STATION VIA AN INTERNET-TYPE NETWORK AND APPLICATION THEREOF TO A SMART CARD DEMONSTRATOR

(30) Priorité: 27.09.1999 FR 9912011
(43) Date de publication de la demande: 17.10.2001
(73) Titulaire: CP8 TECHNOLOGIES, 78431 Louveciennes (FR)
(72) Inventeur: MARIANA, Renaud, F-78150 Le Chesnay (FR)
(74) Mandataire: Cassagne, Philippe M.J.
(86) Numéro de dépôt international: PCT/FR2000/002642
(87) Numéro de publication internationale: WO 2001/024475

(56) Documents cités:
- WO-A-98/57474
- WO-A-99/14678
- DE-A- 19 802 684
- US-A- 5 898 838

## Description

L'invention concerne un procédé de pilotage à distance d'une station d'utilisateur munie d'un lecteur de carte à puce via un réseau de type Internet.

L'invention concerne également une architecture permettant la mise en oeuvre d'un tel procédé.

L'invention s'applique notamment à un démonstrateur de carte à puce.

Dans le cadre de l'invention, le terme "station d'utilisateur" doit être compris dans un sens général. La station précitée peut être notamment constituée par un ordinateur personnel fonctionnant sous divers systèmes d'exploitation, tels WINDOWS ou UNIX (tous deux étant des marques déposées). Elle peut être aussi constituée par une station de travail, un ordinateur portable ou un terminal de carte, dit dédié. Dans ce qui suit, une telle station d'utilisateur sera appelée simplement "terminal".

De même, dans le cadre de l'invention, le terme "réseau Internet" englobe, outre le réseau Internet proprement dit, les réseaux privés d'entreprises ou similaires, dits "intranet", et les réseaux les prolongeant vers l'extérieur, dits "extranet".

Les cartes à puce sont utilisées dans divers domaines : applications bancaires, de santé, comme "porte-monnaie" dit électronique, etc. Sur une carte à puce peuvent en outre coexister plusieurs applications (carte à puce multi-application).

Lorsqu'une nouvelle application est rendue disponible sur une carte à puce, il est souhaitable de pouvoir disposer de terminaux, dédiés ou non, pour organiser des séances de formation, notamment pour présenter les fonctionnalités de cette carte et ses possibilités. Ces séances de formation ou de présentation peuvent s'adresser à des publics très divers : personnel de maintenance, vendeurs, voire usagers finaux. Le contenu pédagogique et la forme des prestations à fournir doivent en général être adaptés au public visé.

Dans l'art connu, les solutions traditionnellement proposées pour la réalisation d'une station de démonstration de carte à puce, que l'on appellera ci-après simplement "démonstrateur", font appel à une configuration à base d'ordinateur individuel et à des programmes spécifiques de pilotage du terminal et de son lecteur de carte à puce. Ces programmes sont le plus souvent écrits dans un langage du type Basic, C++ ou JAVA (marques déposées).

Cette solution, si elle ne nécessite pas généralement un matériel particulièrement coûteux (simple ordinateur individuel), n'est pas pour autant exempte d'inconvénients et parmi lesquels les suivants :
- les programmes spécifiques précités sont le plus souvent volumineux ;
- leur mise en place est également longue et complexe ;
- il est nécessaire de sauvegarder les programmes nouvellement implantés dans la machine et, lors de la première mise en place, si la machine ne comporte pas de programme permettant une sauvegarde sur un périphérique spécialisé, type "IOMEGA" (marque déposée) ou similaire, il est nécessaire de surplus d'implanter un tel programme ;
- pour chaque mise à jour de l'application enregistrée sur la carte à puce ou lorsque le contenu de la démonstration est différent (adaptation au public concerné par exemple), il est nécessaire de réitérer les processus rappelés ci-dessus ; et
- pour les opérateurs, l'apprentissage du mode opératoire d'un logiciel écrit dans les langages rappelés ci-dessus demande du temps, car leurs interfaces graphiques ne sont pas normalisées : les opérateurs doivent donc être spécialisés, ce qui peut entraîner des coûts supplémentaires.

On doit ajouter que, si plusieurs terminaux sont utilisés aux fins de démonstration, les inconvénients précités se répètent pour chacun de ces terminaux : il est notamment nécessaire de charger x fois le même programme, si x est le nombre de terminaux, ces derniers pouvant être très éloignés les uns des autres. Même si l'on recourt à des procédures de téléchargement à partir d'un serveur central, il est quand même nécessaire de s'assurer que la version de logiciel présente dans tous les terminaux est identique. Des procédures spécifiques d'administration sont donc nécessaires.

D'autre part, avec le développement du réseau Internet, il serait souhaitable de pouvoir piloter à distance les terminaux de présentation, via précisément ce réseau et en faisant usage des protocoles de transmission standards utilisés sur celui-ci.

Des solutions de ce type ont été proposées. Cependant ces solutions ne sont pas non plus exemptes d'inconvénients. Elles nécessitent en effet de télécharger ou d'implanter dans le terminal, pour chaque application de démonstration, une pièce de logiciel spécifique connue sous l'appellation anglo-saxonne "plug-in", généralement écrite en langage C ou C++, pour que ce terminal puisse communiquer avec la carte à puce, via un lecteur de carte à puce. Les pièces de logiciels précitées souffrent des mêmes défauts que ceux évoqués ci-dessus: code volumineux qu'il faut installer ou télécharger avant chaque démonstration, interfaces graphiques non normalisées, etc. Comme précédemment, il n'est pas en effet possible d'installer une fois pour toutes un "plug-in", car celui-ci dépend notamment, outre du type de navigateur utilisé, de l'application en démonstration et de la version des programmes de pilotage.

Il est connu par le document US 5 898 838 un système éditeur pour développer un programme client, en utilisant le protocole http et le langage SQL. Ce type de développement fait intervenir de façon classique un navigateur web standard et ne permet pas de s'adapter facilement à différentes applications de démonstration (problème du temps d'installation et de l'accumulation des procédures).

L'invention, tout en remplissant les besoins qui se font sentir, vise à pallier les inconvénients des procédés et dispositifs de l'art connu, et dont certains viennent d'être rappelés.

L'invention se fixe pour but un procédé et une architecture de système permettant de piloter un terminal muni d'un lecteur de carte à puce et connecté de façon classique à un réseau de type Internet, notamment en vu de réaliser des démonstrations d'au moins une application enregistrée dans la carte à puce.

Pour ce faire, selon une caractéristique essentielle de l'invention, le logiciel de pilotage spécifique à chacune des applications de démonstration est hébergé par un serveur éloigné de type "WEB" connecté, également de façon classique, au réseau Internet. Le terminal, pour sa part, est muni d'une pièce de logiciel particulier que l'on dénommera ci-après "spécialisé". Dans le contexte de l'invention, le terme "spécialisé" utilisé pour cette pièce de logiciel signifie seulement qu'il s'agit d'une pièce de logiciel non standard qui doit être implantée dans le terminal, mais en aucun cas qu'elle est spécifique à l'application en cours de démonstration. Tout au contraire cette pièce de logiciel, d'un point de vue "application", est entièrement générique et est indépendante de celle-ci, quelle qu'elle soit.

En outre, selon une autre caractéristique importante, la taille de la pièce de logiciel nécessaire peut être très réduite, pour des raisons liées à la nature des fonctions qui lui sont dévolues et qui seront explicitées ci-après. De ce fait, elle peut être implantée une fois pour toutes dans le terminal et y résider à demeure, sans altérer de façon significative les ressources informatiques propres au terminal, notamment sa capacité de mémoire, en particulier si celui-ci est utilisé pour d'autres tâches.

L'invention présente donc de nombreux avantages, et notamment les suivants :
- une mise à jour simplifiée des démonstrations, puisque seuls les programmes hébergés par le serveur distant doivent être modifiés : aucune intervention spécifique sur les terminaux n'est plus nécessaire ;
- une configuration rapide et simple du terminal, qui peut être un micro-ordinateur de type standard, muni d'un navigateur qui peut également être d'un type courant du commerce, souvent pré-installé, ce pour les mêmes raisons que celles précédemment rappelées (les données spécifiques à la démonstration proprement dite étant localisées dans le serveur) ;
- l'interface graphique est standardisée également puisque fournie par le navigateur dont les caractéristiques et le mode opératoire sont familiers à l'opérateur du terminal, même si celui-ci n'a pas de connaissances particulières en programmation ou en informatique ; et
- le surcoût et l'augmentation de la complexité dus aux dispositions spécifiques à l'invention sont négligeables puisque réduits à la seule implantation d'une pièce de logiciel spécialisé, de taille réduite, implantation qui peut d'ailleurs, dans certaines circonstances, être réalisée une fois pour toute.

Il s'ensuit que le système présente une grande universalité, puisque que le terminal peut virtuellement effectuer toutes les démonstrations d'une entreprise ou d'une société, ce qu'elle que soit la carte à puce à présenter, à la seule condition que cette dernière soit d'un type normalisée pour être compatible avec le terminal, ce qui en soi sort du cadre strict de l'invention. Le système autorise également une grande fiabilité.

L'invention a donc pour objet principal un procédé de pilotage à distance d'une station d'utilisateur via un réseau de type Internet, ladite station d'utilisateur étant munie d'un lecteur de carte à puce et comprenant une première pile protocolaire de communication, ledit lecteur de carte à puce comprenant une deuxième pile protocolaire de communication et ladite carte à puce comprenant une troisième pile protocolaire de communication, permettant, d'une part, des communications entre ladite station d'utilisateur et un serveur éloigné connecté au dit réseau et, d'autre part, des communications entre ladite station d'utilisateur et ladite carte à puce via ledit lecteur de carte à puce, ladite station d'utilisateur comprenant en outre des moyens de génération de requêtes transmises au dit serveur éloigné, caractérisé en ce qu'il comprend :
- une première phase préliminaire de mémorisation dans ledit serveur éloigné de données et/ou instructions permettant l'élaboration par le serveur éloigné de commandes spécifiques sur réception de requêtes spécifiques provenant desdits moyens de génération de requêtes et leur transmission à ladite station d'utilisateur ;
- une deuxième phase préliminaire de chargement dans ladite station d'utilisateur d'une pièce de logiciel spécialisé formant une interface distincte d'un navigateur Web entre lesdites première et deuxième piles protocolaires, et destinée à traduire lesdites commandes spécifiques reçues par ladite station d'utilisateur en des commandes conformes à un premier protocole de communication déterminé ;
- et au moins les étapes suivantes :
   a/ transmission au dit serveur éloigné par les moyens de génération de requêtes d'au moins une requête spécifique ;
   b/ génération par ledit serveur éloigné, sur réception d'une telle requête, d'au moins une desdites commandes spécifiques et leur transmission à ladite station d'utilisateur selon un deuxième protocole de communication déterminé ;
   c/ réception de cette commande spécifique à ladite station d'utilisateur, incluant une interception par ladite pièce de logiciel spécialisé de ladite commande spécifique avant une couche d'application supérieure formée par navigateur web et une traduction de ladite commande spécifique dans ledit premier protocole de communication déterminé
   d/ transmission par ladite pièce de logiciel spécialisé de ladite commande traduite à ladite carte à puce selon ledit premier protocole de communication déterminé via ledit lecteur de carte à puce; et
   e/ activation par ladite commande traduite d'au moins une fonction déterminée d'au moins une application enregistrée dans ladite carte à puce, de manière à réaliser ledit pilotage.

L'invention a encore pour objet une architecture de système pour la mise en oeuvre de ce procédé.

L'invention s'applique plus particulièrement à l'application du procédé et de l'architecture de système à un démonstrateur de carte à puce.

L'invention va maintenant être décrite de façon plus détaillée en se référant aux dessins annexés, parmi lesquels :
- la figure 1 illustre schématiquement un exemple d'architecture de système d'application à base de carte à puce selon l'art connu ;
- la figure 2 illustre de façon plus détaillée l'architecture logique d'un tel système ; et
- la figure 3 illustre un exemple d'architecture pour le pilotage à distance d'un système d'application à base de carte à puce selon l'invention.

Dans ce qui suit, sans en limiter en quoi que ce soit sa portée, on se placera ci-après dans le cadre de l'application préférée de l'invention, sauf mention contraire, c'est-à-dire l'application à un démonstrateur de carte à puce.

On va tout d'abord rappeler brièvement les caractéristiques techniques essentielles d'un système d'application à base de carte à puce. Celui-ci comporte généralement les éléments principaux suivants :
- une carte à puce ;
- un système hôte constituant le terminal précité ;
- un réseau de communication, à savoir le réseau Internet dans l'application préférée ;
- et un serveur d'application connecté au réseau Internet.

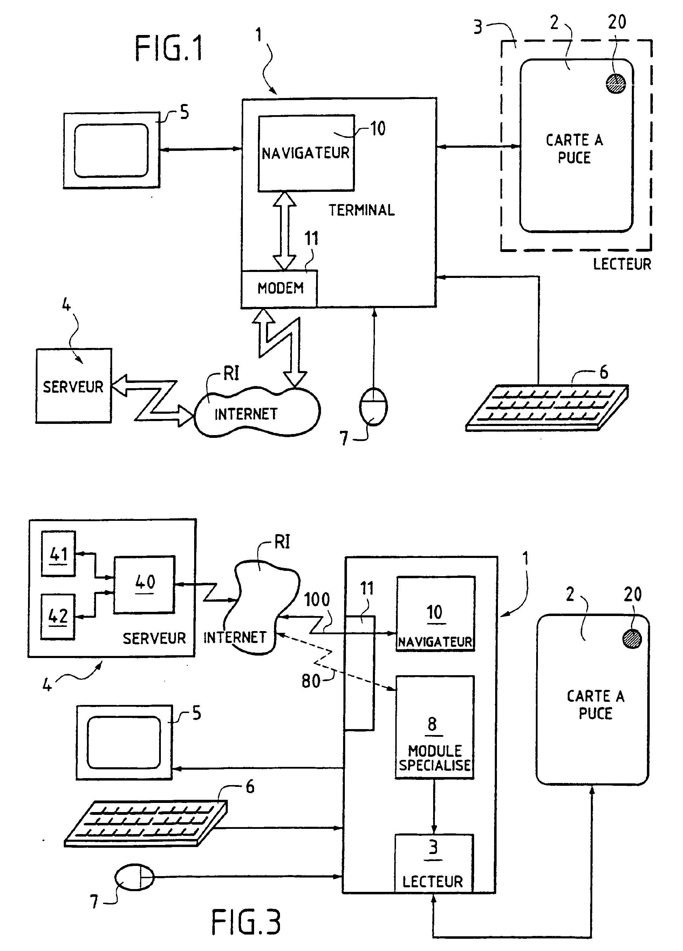

La figure 1 illustre schématiquement un exemple d'architecture de ce type. Le terminal 1, par exemple un ordinateur individuel, comporte un lecteur 3 de carte à puce 2. Ce lecteur 3 peut être ou non physiquement intégré dans le terminal 1. La carte à puce 2 comporte un circuit intégré 20 dont des connexions d'entrées-sorties affleurent en surface de son support pour autoriser une alimentation en énergie électrique et des communications avec le terminal 1. Ce dernier comprend des circuits d'accès 11 au réseau Internet. Il peut s'agir d'un modem pour se connecter à une ligne téléphonique commutée ou à un réseau numérique à intégration de services ("RNIS"), via par exemple un prestataire de services Internet ("Internet Service Provider" ou "ISP", selon la terminologie anglo-saxonne).

Le terminal 1 comprend naturellement tous les circuits et organes nécessaires à son bon fonctionnement, et qui n'ont pas été représentés dans un but de simplification du dessin : unité centrale, mémoires vive et fixe, mémoire de masse à disques magnétiques, lecteur de disquette et/ou de CédéRom, etc.

Habituellement, le terminal 1 est aussi relié à des périphériques classiques, intégrés ou non, tels un écran de visualisation 5, un clavier 6 et un pointeur 7, par exemple de type souris.

Dans le cadre de l'invention, c'est grâce notamment à la coopération de ces terminaux que la démonstration pourra être conduite.

Le terminal 1 peut être mis en communication avec des serveurs connectés au réseau *RI*, dont un seul, 4, est illustré sur la figure 1. Les circuits d'accès 11 mettent le terminal 1 en communication avec les serveurs 4 grâce à un logiciel particulier 10, appelé navigateur, ou "browser" selon la terminologie anglo-saxonne. Celui-ci permet d'accéder à diverses applications réparties sur l'ensemble du réseau *RI*, généralement selon un mode "client-serveur".

Habituellement, les communications sur les réseaux s'effectuent conformément à des protocoles répondant à des standards comprenant plusieurs couches logicielles superposées. Dans le cas d'un réseau *RI* de type Internet, les communications s'effectuent selon des protocoles spécifiques à ce type de communication, mais qui comprennent aussi plusieurs couches logicielles. Le protocole de communication est choisi en fonction de l'application plus particulièrement visée : interrogation de pages ""WEB"", transferts de fichiers, courrier électronique (e-mel, ou "e-mail" selon la terminologie anglo-saxonne), forums ou "news", etc.

L'architecture des réseaux de communication est décrite par diverses couches. A titre d'exemple, le standard "OSI" ("Open System Interconnection"), défini par I' "ISO", comporte sept couches qui vont des couches dites basses (par exemple la couche dite "physique" qui concerne le support de transmission physique) aux couches dites hautes (par exemple la couche dite "d'application"), en passant par des couches intermédiaires, notamment la couche dite de "transport". Une couche donnée offre ses services à la couche qui lui est immédiatement supérieure et requiert de la couche qui lui est immédiatement inférieure d'autres services, via des interfaces appropriées. Les couches communiquent à l'aide de primitives. Elles peuvent également communiquer avec des couches de même niveau. Dans certaines architectures, l'une ou l'autre de ces couches peut être inexistante.

Dans un environnement Internet, les couches sont au nombre de cinq, et de façon plus précise, en allant de la couche supérieure à la couche inférieure : la couche d'applications ("http", "ftp", "e-mail", etc.), la couche de transport ("TCP"), la couche d'adressage de réseau ("IP"), la couche de liens de données ("PPP", "Slip", etc.) et la couche physique.

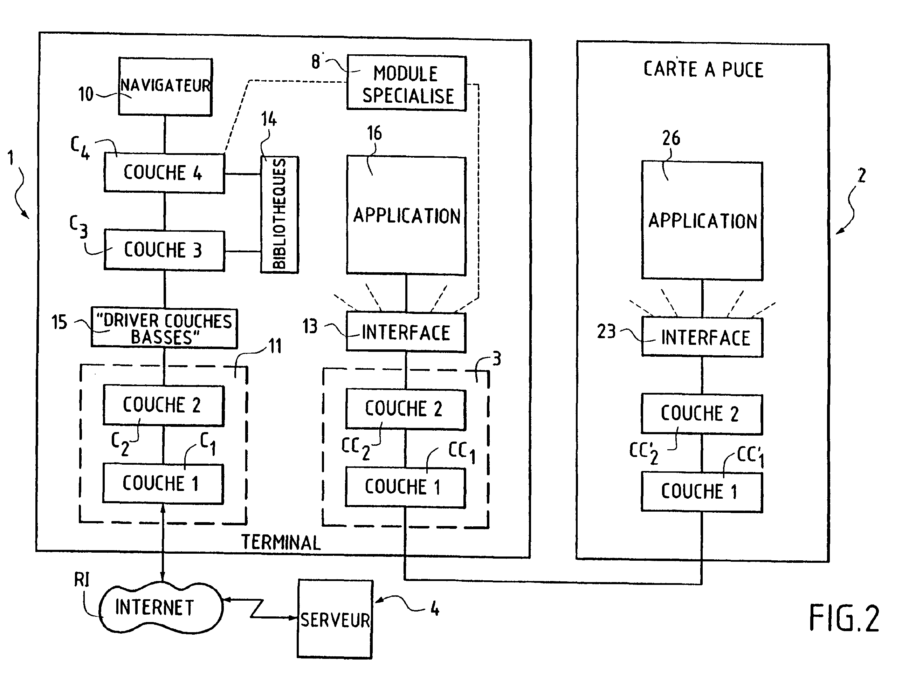

On va maintenant décrire, de façon plus détaillée, un exemple d'architecture typique pour un système d'application à base de carte à puce selon l'art connu, par référence à la figure 2. Sur cette figure, on a décrit plus particulièrement l'architecture logique en couches.

Le terminal 1 comprend les circuits 11 d'accès au réseau *RI* qui regroupent les couches logicielles inférieures C₁ et C₂, correspondant aux couches "physique" et de "lien de données" précitées.

On a également représenté les couches supérieures C₃ et C₄, correspondant aux couches "d'adressage de réseau" ("IP") et de "transport" ("TCP"). La couche supérieure d'application ("http", "ftp", "e-mail", etc.) est schématisée par un navigateur "WEB" 10 de type quelconque, de préférence de type standard du commerce.

L'interface entre les couches inférieures, C₁ et C₂, et les couches supérieures, C₃ et C₄, est constituée par une couche logicielle 15 généralement appelée "driver couches basses". Les couches supérieures, C₃ et C₄, s'appuient sur cette interface et sont mises en oeuvre par l'intermédiaire de bibliothèques de fonctions spécifiques ou bibliothèques réseau 14, avec lesquelles elles correspondent. Dans le cas du réseau Internet, "TCP/IP" est mis en oeuvre au moyen de bibliothèques dites de "sockets".

Cette organisation permet au navigateur 10 de poser des requêtes vers un serveur éloigné 4, pour la consultation de pages "WEB" (protocole "HTTP"), pour le transfert de fichiers (protocole "FTP") ou l'envoi de courrier électronique (protocole "e-mail").

Le terminal 1 comprend également le lecteur de carte 3, intégré ou non. Pour communiquer avec la carte à puce 2, le lecteur de carte englobe également deux couches basses, CC₁ (couche physique) et CC₂ (couche de lien de données), jouant un rôle similaire aux couches C₁ et C₂. Les interfaces logicielles avec les couches CC₁ et CC₂ sont décrites, par exemple, par la spécification "PC/SC" ("part 6, service provider"). Les couches elles-mêmes, CC₁ et CC₂, sont notamment décrites par les normes ISO 7816-1 à 7816-4.

Une couche logicielle supplémentaire 13 forme interface entre des couches applicatives, sous la référence unique 16, et les couches inférieures, CC₁ et CC₂. La fonction principale dévolue à cette couche 13 est une fonction de multiplexage/démultiplexage.

L'architecture du terminal 1 décrite jusqu'à présent est entièrement commune à l'art connu. On a également représenté sur la figure 2, en traits discontinus, un élément supplémentaire 8, que l'on appellera "module spécialisé" et qui est spécifique à l'invention. Ce module 8 est disposé entre la couche C4 et l'interface 13. La fonction de ce module sera explicitée ci-après.

Du côté de la carte à puce 2, on retrouve une organisation similaire à celle du terminal 1, à savoir la présence de deux couches basses, référencées CC'₁ (couche physique) et CC'₂ (couche de lien de données), ainsi qu'une couche d'interface 23, tout à fait similaire à la couche 13. Cette couche 23 assure une interface entre les couches protocolaires CC'₁ et CC'₂ précitées et une ou plusieurs couches applicatives, représentées sous la forme d'un module unique référencé 26.

Les communications entre le terminal 1 et la carte à puce 2 s'effectuent à l'aide de commandes standardisées.

Différents protocoles sont utilisables, et à titre d'exemples non exhaustifs les suivants :
- la recommandation ETSI GSM 11.11 ;
- le protocole défini par la norme ISO 7816-3, en mode caractère T=0 ;
- le protocole défini par la norme ISO 7816-3, en mode bloc T=1 ;
- ou le protocole défini par la norme ISO 3309, en mode trame "HDLC" (pour "High-Level Data Link Control procedure" ou procédure de commande de liaison à haut niveau).

Dans le cadre de l'invention, on utilisera de préférence le protocole ISO 7816-3, en mode bloc.

De façon connue en soi, à chaque couche de protocole il est associé un certain nombre de primitives qui permettent les échanges de données entre couches de même niveau et d'une couche à l'autre.

Dans l'état actuel de la technique, il n'est pas possible de mettre en communication directe la carte à puce avec un serveur éloigné 4, via le réseau Internet *RI*. Aussi, comme il a été rappelé, pour effectuer une démonstration d'une ou plusieurs applications enregistrées de la carte à puce 2, il a été proposé dans l'art connu, soit d'implémenter dans le terminal 1 des logiciels spécifiques, soit de les télécharger à partir d'un serveur éloigné, sous la forme de "plug-ins". Ces solutions présentent de nombreux inconvénients, qui ont été également rappelés.

On va maintenant décrire une architecture de système conforme à l'invention et permettant de pallier ces inconvénients, par référence à la figure 3.

A l'exception de dispositions spécifiques à l'invention, l'architecture présentée sur la figure 3 reprend l'essentiel de la configuration matérielle et logique des figures 1 et 2. Aussi, il n'a été représenté sur cette figure que les éléments indispensables à la bonne compréhension de l'invention. En outre, les éléments communs à ces figures portent les mêmes références et ne seront redécrits qu'en tant que de besoin.

On doit bien comprendre également que la carte à puce 2 ne nécessite aucune adaptation. Les communications entre le terminal 1 et celle-ci s'effectuent, comme dans l'art connu, en utilisant les jeux de commandes normalisées qui viennent d'être décrits succinctement.

Aussi, dans un but de simplification du dessin, les différentes couches protocolaires de communication, en soi communes à l'art connu, n'ont pas été représentées.

Selon une première caractéristique importante de l'invention, l'essentiel des informations et codes nécessaires pour effectuer une démonstration d'une carte à puce particulière, et de façon plus générale pour piloter une telle carte à puce, est localisé, non plus dans le terminal 1, sous quelque forme que ce soit (programme ou "plug-ins" spécifiques téléchargés), mais dans le serveur éloigné 4.

Selon une deuxième caractéristique importante de l'invention, on prévoit un module spécialisé 8 dans le terminal 1. Cependant, il doit être bien compris que le terme "spécialisé" a une signification particulière dans le cadre de l'invention. Ce module 8 est disposé entre la couche C4 de la pile protocolaire du terminal 1 et l'interface 13 (voir figure 2), comme il a été précédemment indiqué. Il est constitué avantageusement d'une pièce de logiciel et a pour fonctions essentielles de réaliser une interface entre le réseau Internet *RI* et le lecteur de carte à puce 3, d'une part, et de traduire des commandes reçues du serveur 4, via le réseau Internet *RI*, en commandes normalisées conformes aux normes ISO précitées. En ce sens, le module 8 est "générique" par nature, car entièrement indépendant de l'application ou des applications enregistrées sur la carte à puce 2. En outre, du fait des fonctions qui lui sont dévolues, la quantité de code nécessaire est très réduite en pratique.

De façon plus détaillée, le serveur éloigné 4 comprend, par exemple, outre des moyens de traitement de données informatisés classiques (non représentés), un serveur "HTTP" 40 proprement dit et des organes de mémorisation, 41 et 42, que l'on a représentés arbitrairement distincts.

Un premier organe de mémorisation 41 permet de stocker des feuilles d'affichage, que l'on appellera "statiques", par exemple dans un format de type "HTML" ou autres ("XML", etc.).

Le second organe de mémorisation, référencé 42, est destiné plus particulièrement à stocker des données représentant les contextes de la ou des cartes à puce objet(s) d'une démonstration. Un "contexte carte à puce" est une représentation en mémoire de la carte à puce 2 au niveau du serveur éloigné 4. Le contexte carte à puce comprend par exemple le numéro de version du système d'exploitation commandant la carte à puce ou "operating system" selon la terminologie anglo-saxonne. L'organe de mémorisation 42 permet de stocker également des données ou instructions permettant d'élaborer un jeu de commandes spécifiques nécessaires aux démonstrations précitées de carte à puce 2. Ces commandes spécifiques vont être interceptées par le module spécialisé 8 et traduites, de façon à pouvoir être comprises par la carte à puce 2 lorsqu'elles lui seront transmises.

Les principales étapes du procédé selon l'invention sont décrites ci-après.

De façon classique en soi, le terminal permet notamment de mettre la carte à puce sous tension, via le lecteur de carte à puce 3, et, de façon plus générale, de l'initialiser. De façon plus précise, c'est le module spécialisé 8 qui met la carte à puce 2 sous tension, par l'intermédiaire d'un script exécuté dans le serveur éloigné 4. Le navigateur "WEB" 10 permet, également de façon classique, de poser des requêtes vers le serveur éloigné 4, via un modem 11 ou un organe similaire, un canal classique de transmission 100 (ligne téléphonique ou autre) et le réseau Internet *RI*. Le chemin de transmission passe habituellement par un prestataire de service, éventuellement un "coupe-feu" ("firewall") et/ou un système dit "proxy" (non représentés). A titre d'exemple, la requête posée permet d'afficher la page d'accueil d'un site "WEB" sur l'écran 5 et, ensuite, de naviguer dans ce site, par affichages successifs de pages, selon les options présentées.

La requête transmise au serveur éloigné 4 peut permettre également d'afficher des pages en langage "HTML" relatives à la carte à puce 2, pages associées à la démonstration en cours et stockées dans l'organe de mémorisation 41.

De façon plus particulière à l'invention, la requête transmise au serveur éloigné 4 a pour résultat la génération par celui-ci d'un jeu de commandes spécifiques destinées à la manipulation de la carte à puce 2 en cours de démonstration.

En effet, certaines requêtes spécifiques sont reconnues comme telles par le serveur 40 et sont traitées dans le cadre du contexte de la carte à puce en mémoire dans l'organe 42. Il est à noter que le contexte de la carte à puce 2 est mis à jour, par exemple lors de la mise sous tension de la carte à puce 2, par utilisation du signal dit de "RESET" de cette dernière.

De façon classique en soi, l'élaboration des commandes générées par le serveur 40 peut être le résultat de l'exécution d'un script de type "CGI" (pour "Common Gate Interface"). Il s'agit d'un processus bien connu de l'Homme de métier dans le domaine des communications de type "client-serveur" sur le réseau Internet. A titre d'exemple, lorsqu'une requête de type formulaire est transmise à un serveur "WEB", celle-ci est transmise via une "passerelle" à un répertoire habituellement appelé "cgi-bin" dans lequel sont enregistrés des scripts. Les données résultats de l'exécution d'un script particulier sont retransmises par le chemin inverse et envoyées au "client" ayant émis la requête, en l'occurrence sous forme de commandes spécifiques transmises au terminal 1.

Cependant, comme il a été rappelé, la carte à puce 2 ne peut pas communiquer directement avec le réseau Internet *RI* et, en particulier, ne peut donc pas recevoir, ni a fortiori interpréter les commandes émises par le serveur 40. Ces commandes sont transmises, de façon habituelle dans des paquets, l'adresse "IP" de destination étant celle du terminal 1, c'est-à-dire le "client". De même, sauf à implanter un "plug-in" spécialisé dans le navigateur 10, ce dernier ne peut pas communiquer directement avec la carte à puce 2.

Le module spécialisé 8 forme interface, par un premier côté, avec les couches protocolaires hautes du terminal 1, c'est-à-dire C4 (voir figure 2). Les commandes spécifiques reçues par le terminal 1 sont interceptées et "comprises" par le module 8 comme lui étant destinées. Selon l'un des caractéristiques essentielles de l'invention, ce dernier les traduit en un jeu de commandes conforme aux normes ISO précitées. Les autres commandes reçues ne sont pas traitées par ce module 8 et transmises, de façon classique, au navigateur 10. Le serveur 4 dispose d'une connexion distincte 80 avec le module spécialisé 8. Cette connexion peut être sécurisée et supporter un chiffrage du type dit "SSL" (pour "Secure Socket Layer").

De façon schématique, pour mieux mettre en évidence le processus propre à l'invention, on a illustré la communication qui s'établit entre le réseau Internet et le module 8 par un canal séparé 80, représenté en traits pointillés. Cependant, on doit bien comprendre que toutes les communications passent par les canaux de transmission habituels, et s'effectuent selon des protocoles de transmission normalisés (par exemple "TCP/IP" pour le module spécialisé 8 et "HTTP" pour le navigateur 10).

Le module 8 forme également interface, par un second côté, avec le lecteur de carte à puce 3. Il transmet donc à celui-ci les commandes qu'il a reçues et traduites. Ces commandes sont déchiffrées si nécessaires (si la liaison était sécurisée) et traduites. Elles sont donc désormais compréhensibles par la carte à puce 2. En effet, après traduction, les commandes retransmises à la carte à puce 2, via le lecteur 3, sont au format ISO 7816-4 et sont donc compatibles avec le mode de communication utilisé entre le lecteur de carte à puce 3 et la carte à puce 2.

Les commandes ainsi transmises à la carte à puce 2 permettent, par exemple, une mise sous-tension de la carte à puce 2, d'activer la ou les applications mémorisées dans celle-ci, par exemple pour exécuter des fonctions particulières et/ou lire des fichiers spécifiques enregistrés dans celle-ci. En retour, la carte à puce 2 transmet au module spécialisé 8, via le lecteur de carte à puce 3, des commandes et/ou instructions qui permettront, dans une étape ultérieure, l'affichage sur l'écran 5 de différentes données propres à la carte à puce 2 en cours de démonstration. Cependant, ces commandes et/ou instructions sont tout d'abord traduites par le module spécialisé 8, transmise au serveur 4, et retransmises au terminal 1 et au navigateur 10.

Le module spécialisé 8 est un serveur de type "TCP/IP" qui reçoit des requêtes "TCP/IP" en provenance d'un script exécuté dans le serveur 40. La communication avec le module spécialisé 8 s'insère dans une requête entre le navigateur 10 et le serveur 40. Ce script est chargé d'exécuter une succession de commandes à destination du module spécialisé 8. Ce dernier agit alors comme un serveur "TCP/IP" et renvoie une réponse pour chaque commande "TCP/IP" reçue du serveur 40. Le script précité, qui peut faire appel à un processus du type dit "CGI" (pour "Common Gate Interface") ou "Servlet Java" (marque déposée), traite l'ensemble des réponses "TCP/IP" du module spécialisé 8. Ensuite, il formate une réponse de type "HTTP" transmise au navigateur 10. Ainsi un utilisateur (non représenté), par exemple le propriétaire de la carte à puce 2, peut interagir avec cette carte à puce 2 par l'intermédiaire du navigateur 10, de scripts associés au serveur 40, du module spécialisé 8 et du lecteur de la carte à puce 3.

Le navigateur 10 permet de visualiser le contenu de la carte à puce 2.

On constate donc que la carte à puce 2 est en réalité pilotée directement par un processus du type "CGI" et un contexte carte mémorisé dans le serveur 4. Tout se passe donc comme si la carte à puce 2 était en communication directe avec ce dernier et recevait des requêtes du réseau Internet *RI.*

Pour fixer les idées, pour effectuer les tâches qui lui sont dévolues, le module 8 a une taille typique de 50 KO. Il peut être chargé dans les moyens de mémorisation (non représentés) dont est pourvu le terminal 1, avant le début d'une démonstration, de façon très rapide compte tenu de sa très faible taille, à l'aide d'une disquette par exemple, ou à partir de tout autre support d'enregistrement. Mais il peut être aussi être laissé à demeure sans inconvénients, après un chargement initial, ce pour la même raison et sans obérer de façon significative les ressources du terminal, notamment les ressources mémoires de celui-ci. Toujours du fait de sa faible taille, il est également possible de le télécharger à partir du serveur éloigné 4, ou de tout autre serveur "WEB". Avec les technologies actuelles, même en utilisant une simple ligne téléphonique de type commuté, en ayant recours à un modem rapide (56 K), le téléchargement d'un programme de cette taille ne nécessite que quelques dizaines de secondes. Cette méthode présente l'avantage, de toujours disposer de la dernière version du programme spécialisé disponible, constituant le module 8.

On constate aisément qu'il n'est pas nécessaire que l'opérateur possède des connaissances particulières en programmation. L'interface graphique, qui est celle du navigateur "WEB" 10, qui peut être avantageusement d'un type bien connu du commerce, lui est tout à fait familière. Il lui suffit de connaître l'adresse Internet du site "WEB" sur lequel il doit se connecter, adresse qui peut être mise au préalable en mémoire du navigateur 10, dans une liste dite de "favoris" ou appellations similaires, généralement connues sous la terminologie anglo-saxonne de "bookmarks".

Le serveur 4 pouvant stocker, comme il a été indiqué, des pages dites statiques en langage "HTML", les différentes étapes de la démonstration à réaliser peuvent être affichées sous forme d'un menu constitué d'hyperliens, l'opérateur sélectionnant l'une ou l'autre des options présentées, à l'aide du clavier 6, ou en cliquant dessus à l'aide de la souris 7.

Cependant, pour faciliter encore plus le déroulement de la démonstration, et l'automatiser d'avantage, il est également possible de télécharger, dans le navigateur 10, une appliquette, ou "applet" selon la terminologie anglo-saxonne, par exemple sous la forme d'une pièce de logiciel en langage "JAVA" dont la taille est très réduite. Cet "applet" permet de gérer le déroulement de la démonstration en transmettant les requêtes nécessaires au serveur 4, qui à son tour génère des commandes spécifiques au module spécialisé 8, puis transmet le résultat de calculs qu'il effectue au navigateur 10, sous la forme d'une réponse "HTTP". Dans ce cas, l'essentiel du travail de l'opérateur pourra se résumer à se connecter au serveur 4 et éventuellement, si besoin est, dans une phase initiale, à charger ou à télécharger, la pièce de logiciel constituant le module spécialisé 8, après avoir mis sous tension le terminal 1 et avoir introduit la carte à puce 2 dans le lecteur 3.

A la lecture de ce qui précède, on constate aisément que l'invention atteint bien les buts qu'elle s'est fixés.

La carte à puce ne nécessite aucune adaptation. Le terminal de démonstration peut être un micro-ordinateur du commerce ou un appareil similaire. Il ne nécessite pas non plus d'adaptation particulière. La seule contrainte spécifique à l'invention reste très limitée : il est seulement nécessaire de procéder au chargement, dans une phase préliminaire, d'une pièce de logiciel de faible taille, pièce de logiciel entièrement indépendante de l'application ou des applications enregistrées sur la carte à puce en cours de démonstration. Comme il a été indiqué, cette pièce de logiciel peut être chargée une fois pour toute. Elle peut être également téléchargée à partir du réseau Internet. Il s'ensuit que la configuration d'une station de démonstration est réduite à sa plus simple expression et ne nécessite aucune compétence particulière, ce qui contribue également à rendre le procédé particulièrement économique.

L'interface graphique est familière à tout opérateur, puisqu'il s'agit de celle associé à un navigateur "WEB", qui peut être avantageusement de type courant.

Le procédé permet une grande souplesse et une grande universalité. En effet, les données spécifiques à une ou plusieurs démonstrations sont stockées dans un serveur éloigné et sont susceptibles d'être utilisées par un grand nombre de stations. La mise à jour d'une démonstration donnée et/ou l'ajout d'une ou plusieurs démonstrations s'effectuent très simplement, puisque seul le serveur éloigné stockant les données et les programmes nécessaires à ces démonstrations est concerné.

Le procédé permet en outre un mode interactif entre des pages, par exemple de type "HTML", fournies par le serveur éloigné, et des informations et données provenant de la carte à puce, sous le contrôle de commandes et requêtes provenant directement de ce même serveur, et transmises après traduction par la pièce de logiciel spécialisée à la carte à puce, via le lecteur.

Il doit être clair cependant que l'invention n'est pas limitée aux seuls exemples de réalisations explicitement décrits, notamment en relation avec l'architecture illustrée par la figure 3.

Enfin, bien que le procédé et l'architecture aient été décrits de façon détaillée dans le cas d'un démonstrateur de carte puce, l'invention n'est en aucun cas limité à cette application particulière.

L'invention peut trouver application à chaque fois que l'on désire piloter une station comprenant un terminal et un lecteur de carte à puce, via le réseau Internet ou un réseau de type similaire : intranet, extranet.

## Revendications

1. Procédé de pilotage à distance d'une station d'utilisateur (1) via un réseau de type Internet (*RI*), ladite station d'utilisateur étant munie d'un lecteur de carte à puce (3) et comprenant une première pile protocolaire de communication, ledit lecteur de carte à puce (3) comprenant une deuxième pile protocolaire de communication et ladite carte à puce (2) comprenant une troisième pile protocolaire de communication, permettant, d'une part, des communications entre ladite station d'utilisateur (1) et un serveur éloigné (4) connecté au dit réseau (*RI*) et, d'autre part, des communications entre ladite station d'utilisateur (1) et ladite carte à puce (2) via ledit lecteur de carte à puce (3), ladite station d'utilisateur (1) comprenant en outre des moyens (10) de génération de requêtes transmises au dit serveur éloigné (4), **caractérisé en ce qu'**il comprend:
- une première phase préliminaire de mémorisation (42) dans ledit serveur éloigné (4) de données et/ou instructions permettant l'élaboration par le serveur éloigné (4) de commandes spécifiques sur réception de requêtes spécifiques provenant desdits moyens de génération de requêtes (10) et leur transmission à ladite station d'utilisateur (1) ;
- une deuxième phase préliminaire de chargement dans ladite station d'utilisateur (1) d'une pièce de logiciel spécialisé (8) formant une interface distincte d'un navigateur "web" entre lesdites première et deuxième piles protocolaires, et destinée à traduire lesdites commandes spécifiques reçues par ladite station d'utilisateur (1) en des commandes conformes à un premier protocole de communication déterminé;
- et au moins les étapes suivantes:
a/ transmission au dit serveur éloigné, par les moyens (10) de génération de requêtes, d'au moins une requête spécifique;
b/ génération par ledit serveur éloigné (4), sur réception d'une telle requête, d'au moins une desdites commandes spécifiques et leur transmission à ladite station d'utilisateur (1) selon un deuxième protocole de communication déterminé;
c/ réception de cette commande spécifique à ladite station d'utilisateur (1), incluant une interception par ladite pièce de logiciel spécialisé (8) de ladite commande spécifique avant une couche d'application supérieure formée par navigateur web et une traduction de ladite commande spécifique dans ledit premier protocole de communication déterminé;
d/ transmission par ladite pièce de logiciel spécialisé (8) de ladite commande traduite à ladite carte à puce (2) selon ledit premier protocole de communication déterminé via ledit lecteur de carte à puce (3) ; et
e/ activation par ladite commande traduite d'au moins une fonction déterminée d'au moins une application (26) enregistrée dans ladite carte à puce (2), de manière à réaliser ledit pilotage.

2. Procédé selon la revendication 1, **caractérisé en ce que** lesdites données et/ou instructions mémorisées dans ledit serveur éloigné (4) et permettant "élaboration de commandes spécifiques comprennent des données dites de contexte de carte à puce, ledit contexte étant une représentation, dans la mémoire dudit serveur éloigné (4), de ladite carte à puce (2) présente dans ladite station d'utilisateur (1).

3. Procédé selon la revendication 2, **caractérisé en ce que** ladite carte à puce (2) étant commandée par un système d'exploitation associé à un numéro de version, ledit contexte comprend au moins ledit numéro de version du système d'exploitation.

4. Procédé selon la revendication 1, **caractérisé en ce qu'**il comprend en outre, suite à ladite étape d'activation, au moins:
f/ une étape de transmission de données et/ou instructions entre ladite carte à puce (2) et ledit terminal (1), via ledit lecteur de carte à puce (3), ladite transmission s'effectuant selon ledit premier protocole de communication déterminé;
g/ une étape de traduction desdites données et/ou instructions par ladite pièce de logiciel spécialisé (8) et leur transmission vers ledit serveur éloigné (4), selon ledit deuxième protocole de communication déterminé;
h/ une étape de traitement de ces données et/ou instructions par ledit serveur éloigné (4) ;
i/ une étape d'élaboration par ce serveur (4) de données caractéristiques d'une configuration de ladite carte à puce (2) et/ou d'une application enregistrée dans cette carte à puce (2) et de transmission desdites données caractéristiques audit terminal (1) suivant un troisième protocole de communication déterminé; et
j/ une étape d'affichage, sur un écran de visualisation (5) connecté au dit terminal (1), desdites données caractéristiques.

5. Procédé selon la revendication 4, **caractérisé en ce que** lesdits moyens de génération de requêtes étant constitués par un navigateur de type "WEB" (10), il comprend une troisième phase préliminaire consistant à enregistrer dans ledit serveur éloigné (4) des données constituant des pages d'affichage dites statiques, et des étapes subséquentes comprenant la transmission, selon ledit troisième protocole de communication déterminé, sur réception de requêtes spécifiques générées par ledit navigateur (10), de tout ou partie de ces données au dit terminal pour afficher des pages d'information associées à ladite carte à puce (2) sur ledit écran de visualisation (5).

6. Procédé selon la revendication 5, **caractérisé en ce qu'**il comprend une quatrième phase préliminaire consistant à générer, à l'aide dudit navigateur (10), une requête particulière transmise à un serveur éloigné connecté au dit réseau Internet (*RI*), en vu de télécharger une pièce particulière de logiciel dite appliquette dans le navigateur (10), de manière à automatiser tout ou partie desdites étapes a/ à j/.

7. Procédé selon la revendication 6, **caractérisé en ce que** ladite appliquette est écrite en langage "JAVA" (marque déposée).

8. Procédé selon la revendication 1, **caractérisé en ce que** lesdites commandes spécifiques sont le résultat de l'exécution d'un script de type "CGI" dans ledit serveur éloigné (4).

9. Procédé selon la revendication 1, **caractérisé en ce que** ladite pièce de logiciel spécialisé (8) est chargée dans ladite station d'utilisateur (1), pendant ladite première phase préliminaire, à partir d'un support d'enregistrement de données.

10. Procédé selon la revendication 1, **caractérisé en ce que** ladite pièce de logiciel spécialisé est téléchargée dans ladite station d'utilisateur (1), pendant ladite première phase préliminaire, à partir d'un serveur éloigné, via ledit réseau Internet (*RI*).

11. Procédé selon la revendication 1, **caractérisé en ce que** ledit premier protocole de communication déterminé est du type "TCP/IP".

12. Procédé selon la revendication 1, **caractérisé en ce que** ledit deuxième protocole de communication déterminé est conforme aux normes ISO 7816-1 à 7816-4.

13. Procédé selon la revendication 4, **caractérisé en ce que** ledit troisième protocole de communication déterminé est du type "HTTP".

14. Procédé selon la revendication 1, dans lequel ladite pièce de logiciel spécialisé (8) forme une interface avec les couches de protocole supérieures de la station d'utilisateur (1) et intercepte ladite commande spécifique reçue dans la station d'utilisateur (1) au niveau d'une couche supérieure (C4) correspondant à la couche de transport TCP.

15. Architecture de système de pilotage à distance d'une station d'utilisateur (1) via un réseau de type Internet (*RI*), ladite station d'utilisateur (1) étant munie d'un lecteur de carte à puce (3), et comprenant une première pile protocolaire de communication, ledit lecteur de carte à puce (3) comprenant un deuxième pile protocolaire de communication et ladite carte à puce (2) comprenant une troisième pile protocolaire de communication, permettant, d'une part, des communications entre ladite station d'utilisateur (1) et un serveur éloigné (4) connecté au dit réseau et, d'autre part, des communications entre ladite station d'utilisateur (1) et ladite carte à puce (2) via ledit lecteur de carte à puce (3), ladite station d'utilisateur (1) comprenant en outre des moyens de génération de requêtes (10) transmises au dit serveur éloigné (4), **caractérisée en ce que** ledit serveur éloigné (4) est muni de moyens de mémorisation (41, 42) permettant le stockage de données et/ou instructions permettant l'élaboration de commandes spécifiques sur réception de requêtes spécifiques provenant desdits moyens de génération de requêtes (10) et leur transmission à ladite station d'utilisateur (1) et **en ce que** ladite station d'utilisateur (1) est munie d'un module supplémentaire (8), dit spécialisé formant une interface distincte d'un navigateur "web" entre lesdites première et deuxième piles protocolaires, ledit module supplémentaire (8) spécialisé étant agencé pour intercepter, avant la couche d'application supérieure représentée par un navigateur web, ledites commandes spécifiques reçues par la station d'utilisateur (1) et pour traduire lesdites commandes spécifiques, selon un premier protocole de communication déterminé, en des commandes conformes à un deuxième protocole de communication déterminé, de manière à les transmettre, selon ledit deuxième protocole de communication déterminé, via ledit lecteur de carte à puce (3), à ladite carte à puce (2), pour activer au moins une fonction déterminée d'au moins une application enregistrée dans cette carte à puce (2).

16. Architecture de système selon la revendication 15, **caractérisée en ce que** ledit serveur éloigné (4) comprend un serveur "HTTP" (40), des premiers moyens de mémorisation (42) pour le stockage desdites données et/ou instructions permettant l'élaboration de commandes spécifiques et des seconds moyens de moyens de mémorisation (41) pour le stockage de données constituant des pages d'affichage en langage "HTML".

17. Architecture de système selon la revendication 15, dans laquelle ledit module supplémentaire (8) spécialisé est agencé pour former une interface avec des couches protocolaires supérieures de la station d'utilisateur (1) et pour intercepter les commandes spécifiques reçues dans la station d'utilisateur (1) au niveau d'une couche supérieure (C4) correspondant à la couche de transport TCP.

18. Application de l'architecture système selon la revendication 15, à la réalisation d'un démonstrateur de carte à puce (2), **caractérisée en ce que** :
- la carte à puce (2) envoie des données représentatives d'un contexte de la carte à puce vers le serveur éloigné (4) ;
- les données envoyées par la puce (2) sont reçues dans la station d'utilisateur (1) selon ledit deuxième protocole de communication déterminé et sont traduites par le module supplémentaire (8) ;
- les données traduites sont transmises selon ledit premier protocole de communication déterminé par la station d'utilisateur (1) au serveur éloigné ;
- le serveur éloigné (4) élabore, à partir des données traduites transmises par la station d'utilisateur (1), des données caractéristiques d'un contexte de ladite carte à puce (2) ;
- le serveur éloigné (4) transmet à la station d'utilisateur (1) lesdites données caractéristiques, suivant un troisième protocole de communication déterminé ; et
- après réception des données caractéristiques par le module supplémentaire (8), un écran de visualisation de ladite station d'utilisateur (1) affiche les données caractéristiques transmises par ledit serveur éloigné (4).

## Claims

1. Method for remote control of a user station (1) via an internet-type network (RI), said user station being equipped with a smart card reader (3) and comprising a first communication protocol stack, said smart card reader (3) comprising a second communication protocol stack and said smart card (2) comprising a third communication protocol stack, allowing communications between said user station (1) and a remote server (4) connected to said network (RI) and communications between said user station (1) and said smart card (2) via said smart card reader (3), said user station (1) further comprising means (10) for generating requests transmitted to said remote server (4), **characterized in that** it comprises:
- a first preliminary phase for storing (42) in said remote server (4) data and/or instructions allowing the generation by the remote server (4) of specific command upon reception of specific requests originating from said request generating means (10) and their transmission to said user station (1);
- a second preliminary phase for loading into said user station (1) a piece of specialized software (8) forming an interface distinct from a web browser between said first and second protocol stacks and designed to translate said specific commands received by said user station (1) into commands that conform to a first given communication protocol;
- and at least the following steps:
a/ the transmission to said remote server by the request generating means (10) of at least one specific request;
b/ the generation by said remote server (4), upon reception of such a request, of at least one of said specific commands and their transmission to said user station (1) using a second given communication protocol;
c/ the reception of said specific command in said user station (1), including the interception by said piece of specialized software (8) of said specific command before an higher application layer formed by the web browser and a translation of said specific command into said first given communication protocol;
d/ the transmission by said piece of specialized software (8) of said translated command to said smart card (2) using said first given communication protocol, via said smart reader (3); and
e/ the activation by said translated command of at least one given function of at least one application (26) stored in said smart card (2), in order to perform said control.

2. Method according to claim 1, **characterized in that** said data and/or instructions stored in said remote server (4) and allowing the generation of specific commands comprise so-called smart card context data, said context being a representation, in the memory of said remote server (4), of said smart card (2) present in said user station (1).

3. Method according to claim 2, **characterized in that**, said smart card (2) being controlled by an operating system associated with a version number, said context comprises at least said version number of the operating system.

4. Method according to claim 1, **characterized in that** it also comprises, subsequent to said activation step, at least:
f/ a step for transmitting data and/or instructions between said smart card (2) and said terminal (1), via said smart card reader (3), said transmission being performed using said first given communication protocol;
g/ a step for the translation of said data and/or instructions by said piece of specialized software (8) and its transmission to said remote server (4), using said second given communication protocol;
h/ a step for the processing of this data and/or these instructions by said remote server (4);
i/ a step for the generation by this server (4) of data characteristic of a configuration of said smart card (2) and/or of an application stored in said smart card (2), and for the transmission of said characteristic data to said terminal (1) using a third given communication protocol; and
j/ a step for the display, on a display screen (5) connected to said terminal (1), of said characteristic data.

5. Method according to claim 4, **characterized in that**, said request generating means being constituted by a web type browser (10), it comprises a third preliminary phase consisting of storing in said remote server (4) data constituting so-called static display pages, and subsequent steps comprising the transmission, using said third given communication protocol, upon reception of specific requests generated by said browser (10), of all or some of this data to said terminal in order to display pages of information associated with said smart card (2) on said display screen (5).

6. Method according to claim 5, **characterized in that** it comprises a fourth preliminary phase consisting of generating, by means of said browser (10), a particular request transmitted to a remote server connected to said internet network (*RI*), in order to download a particular piece of software called an applet into the browser (10), so as to automate all or some of said steps a/ through j/.

7. Method according to claim 6, **characterized in that** said applet is written in JAVA (registered trademark) language.

8. Method according to claim 1, **characterized in that** said specific commands are the result of the execution of a CGI type script in said remote server (4).

9. Method according to claim 1, **characterized in that** said piece of specialized software (8) is loaded into said user station (1) during said first preliminary phase, from a data recording medium.

10. Method according to claim 1, **characterized in that** said piece of specialized software (8) is downloaded into said user station (1) during said first preliminary phase, from a remote server, via said internet network (*RI*).

11. Method according to claim 1, **characterized in that** said first given communication protocol is of the TCP/IP type.

12. Method according to claim 1, **characterized in that** said second given communication protocol conforms to ISO standards 7816-1 through 7816-4.

13. Method according to claim 4, **characterized in that** said third given communication protocol is of the HTTP type.

14. Method according to claim 1, wherein said piece of specialized software (8) forms an interface with the higher protocol layer of the user station (1) and intercepts said specific command received by the user station (1) at the level of an higher layer (C4) corresponding to the transport layer TCP.

15. System architecture for remote control of a user station (1) via an internet-type network (*RI*), said user station (1) being equipped with a smart card reader (3) and comprising a first communication protocol stack, said smart card reader (3) comprising a second communication protocol stack and said smart card (2) comprising a third communication protocol stack, allowing communications between said user station (1) and a remote server (4) connected to said network and communications between said user station (1) and said smart card (2) via said smart card reader (3), said user station (1) also comprising means for generating requests (10) transmitted to said remote server (4), **characterized in that** said remote server (4) is equipped with storage means (41, 42) for storing data and/or instructions allowing the generation of specific commands upon reception of specific requests originating from said request generating means (10) and their transmission to said user station (1), and **in that** said user station (1) is equipped with an additional so-called specialized module (8) forming an interface distinct from a web browser between said first and second protocol stacks, said additional specialized module (8) being arranged for intercepting before higher application layer represented by a web browser said specific commands received by the user station (1) and for translating said received specific commands in conformity with a first given communication protocol, into commands that conform to a second given communication protocol, in order to transmit them, using said second given communication protocol, via said smart card reader (3) to said smart card (2), so as to activate at least one given function of at least one application stored in said smart card (2).

16. System architecture according to claim 15, **characterized in that** said remote server (4) comprises an HTTP server (40), first storage means (42) for storing said data and/or instructions allowing the generation of specific commands, and second storage means (41) for storing data constituting display pages in HTML language.

17. System architecture according to claim 15, wherein said additional specialized module (8) is arranged for forming an interface with higher protocol layer of the user station (1) and for intercepting the specific commands received by the user station (1) at the level of an higher layer (C4) corresponding to the transport layer TCP.

18. Application of the system architecture according to claim 15 to the creation of a smart card demonstrators (2) **characterized in that**:
- the smart card (2) sends representative of a smart card context to a remote server (4);
- the data sent by the smart card (2) are received in the user station (1) according said second communication protocol, and are translated by the additional module (8);
- the translated data are transmitted according said first communication protocol by the user station (1) to the remote server;
- the remote server (4) elaborates, from the translated data transmitted by the user station (1), some data characterizing a context of said smart card (2);
- the remote server (4) transmits to the user station (1) said characterizing data, according a third communication protocol; and
- after reception of the characterizing data by the additional module (8), a display screen of said user station (1) displays the characterizing data transmitted by said remote server (4).

## Patentansprüche

1. Verfahren zur Fernsteuerung einer Benutzerstation (1) über ein Netzwerk des Typs Internet (*RI*), wobei die besagte Benutzerstation einen Chipkartenleser (3) und einen ersten Kommunikationsprotokollstapel besitzt, wobei der Chipkartenleser (3) einen zweiten Kommunikationsprotokollstapel und die Chipkarte (2) einen dritten Kommunikationsprotokollstapel umfasst, was einerseits Kommunikationen ermöglicht zwischen der Benutzerstation (1) und einem entfernten Server (4), der mit dem Netzwerk (*RI*) verbunden ist, und andererseits Kommunikationen zwischen der Benutzerstation (1) und der Chipkarte (2) über den Chipkartenleser (3), wobei die Benutzerstation (1) außerdem Mittel (10) zum Generieren von Anfragen, die an den entfernten Server (4) übermittelt werden, besitzt, **dadurch gekennzeichnet, dass** es Folgendes umfasst:
- eine erste Speicherungs-Vorphase (42) von Daten und/oder Anweisungen in den entfernten Speicher (4), die nach Empfang spezifischer Anfragen aus den besagten Anfrage-Generiermitteln (10) das Erstellen spezifischer Befehle durch den entfernten Server (4) und ihre Übermittlung zur Benutzerstation (1) gestatten:
- eine zweite Lade-Vorphase eines Spezialprogrammstücks (8) in die Benutzerstation (1), welches Programmstück eine separate Schnittstelle eines "Web"-Browsers zwischen dem ersten und dem zweiten Protokollstapel bildet, die dafür bestimmt ist, die von der Benutzerstation (1) empfangenen spezifischen Befehle in Befehle zu übersetzen, die mit einem ersten bestimmten Kommunikationsprotokoll konform sind;
- und mindestens einen der folgenden Schritte:
a/ Übermittlung mindestens einer spezifischen Anfrage an den entfernten Server durch die Anfrage-Generiermittel (10);
b/ Generierung mindestens eines der spezifischen Befehle durch den entfernten Server (4) nach Empfang einer solchen Anfrage und seine Übermittlung an die Benutzerstation (1) gemäss einem zweiten bestimmten Kommunikationsprotokoll;
c/ Empfang dieses spezifischen Befehls in der Benutzerstation (1) mit Abfangen desselben durch das Spezialprogrammstück (8) vor einer oberen Anwendungsschicht, die vom Webbrowser gebildet wird, und mit Übersetzen des spezifischen Befehls im ersten bestimmten Kommunikationsprotokoll;
d/ Übermittlung des übersetzten Befehls durch das Spezialprogrammstück (8) an die Chipkarte (2) gemäss dem ersten bestimmten Kommunikationsprotokoll und über den Chipkartenleser (3); und
e/ Aktivierung mindestens einer bestimmten Funktion mindestens einer in der Chipkarte (2) gespeicherten Anwendung (26) durch den übersetzten Befehl, so dass die besagte Steuerung ausgeführt wird.

2. Verfahren nach Anspruch 1, **dadurch gekennzeichnet, dass** die im entfernten Server (4) gespeicherten und das "Erstellen spezifischer Befehle" gestattenden Daten und/oder Anweisungen sogenannte Chipkartenkontext-Daten enthalten, wobei der besagte Kontext eine Darstellung der in der Benutzerstation (1) vorhandenen Chipkarte (2) im Speicher des entfernten Servers (4) ist.

3. Verfahren nach Anspruch 2, **dadurch gekennzeichnet, dass** die Chipkarte (2) von einem mit einer Versionsnummer verknüpften Betriebssystem gesteuert wird, wobei der besagte Kontext mindestens die Versionsnummer des Betriebssystems umfasst.

4. Verfahren nach Anspruch 1, **dadurch gekennzeichnet, dass** es außerdem nach der besagten Aktivierungsphase mindestens Folgendes umfasst:
f/ einen Übermittlungsschritt von Daten und/oder Anweisungen zwischen der Chipkarte (2) und dem Terminal (1) über den Chipkartenleser (3), wobei die Übermittlung gemäss dem ersten bestimmten Kommunikationsprotokoll erfolgt;
g/ einen Übersetzungsschritt der Daten und/oder Anweisungen durch das Spezialprogrammstück (8) und ihre Übermittlung zum entfernten Server (4) gemäss dem zweiten bestimmten Kommunikationsprotokoll;
h/ einen Bearbeitungsschritt dieser Daten und/oder Anweisungen durch den entfernten Server (4);
i/ einen Erstellungsschritt von charakteristischen Daten einer Konfiguration der Chipkarte (2) und/oder einer in dieser Chipkarte (2) gespeicherten Anwendung durch den entfernten Server (4) und einen Übermittlungsschritt der charakteristischen Daten zum Terminal (1) gemäss einem dritten bestimmten Kommunikationsprotokoll; und
j/ einem Anzeigeschritt der charakteristischen Daten an einem Visualisierungsbildschirm (5), der mit dem Terminal (1) verbunden ist.

5. Verfahren nach Anspruch 4, **dadurch gekennzeichnet, dass** vor dem Hintergrund, dass die Anfrage-Generiermittel von einem Browser des Typs "WEB" (10) gebildet werden, es eine dritte Vorphase umfasst, die darin besteht, im entfernten Server (4) Daten abzuspeichern, welche sogenannte statische Anzeigeseiten bilden, sowie nachfolgende Schritte, die nach Empfang spezifischer, vom Browser (10) generierter Anfragen die Übermittlung eines Teils oder der Gesamtheit dieser Daten an das besagte Terminal gemäss dem dritten bestimmten Kommunikationsprotokoll umfassen, um mit der Chipkarte (2) verknüpfte Informationsseiten am Visualisierungsbildschirm (5) anzuzeigen.

6. Verfahren nach Anspruch 5, **dadurch gekennzeichnet, dass** es eine vierte Vorphase umfasst, die darin besteht, mit Hilfe des Browsers (10) eine besondere Anfrage zu generieren, die zu einem mit dem Internet-Netz (*RI*) verbundenen, entfernten Server übermittelt wird, mit dem Zweck, ein besonderes Programmstück - Applet genannt - in den Browser (10) herunterzuladen, so dass die Schritte a/ bis j/ teilweise oder vollständig automatisiert werden.

7. Verfahren nach Anspruch 6, **dadurch gekennzeichnet, dass** das besagte Applet in der "JAVA" Sprache (geschützte Marke) geschrieben ist.

8. Verfahren nach Anspruch 1, **dadurch gekennzeichnet dass** die spezifischen Befehle das Ergebnis der Ausführung eines Scripts des Typs "CGI" im entfernten Server (4) sind.

9. Verfahren nach Anspruch 1, **dadurch gekennzeichnet, dass** das Spezialprogrammstück (8) während der ersten Vorphase aus einem Datenaufzeichnungsträger in die Benutzerstation (1) geladen wird.

10. Verfahren nach Anspruch 1, **dadurch gekennzeichnet, dass** das Spezialprogrammstück während der ersten Vorphase aus einem entfernten Server über das Internet-Netz (*RI*) in die Benutzerstation (1) geladen wird.

11. Verfahren nach Anspruch 1, **dadurch gekennzeichnet, dass** das erste bestimmte Kommunikationsprotokoll vom Typ "TCP/IP" ist.

12. Verfahren nach Anspruch 1, **dadurch gekennzeichnet, dass** das zweite bestimmte Kommunikationsprotokoll den Normen ISO 7816-1 bis 7816-4 entspricht.

13. Verfahren nach Anspruch 4, **dadurch gekennzeichnet, dass** das dritte bestimmte Kommunikationsprotokoll vom Typ "HTTP" ist.

14. Verfahren nach Anspruch 1, bei welchem das Spezialprogrammstück (8) eine Schnittstelle mit den oberen Protokollschichten der Benutzerstation (1) bildet und den spezifischen Befehl abfängt, der in der Benutzerstation (1) an der oberen Schicht (C4), die der Transportschicht TCP entspricht, empfangen wird.

15. Architektur eines Systems zur Fernsteuerung einer Benutzerstation (1) über ein Netzwerk des Typs Internet (*RI*), wobei die Benutzerstation (1) einen Chipkartenleser (3) und einen ersten Kommunikationsprotokollstapel besitzt, wobei der Chipkartenleser (3) einen zweiten Kommunikationsprotokollstapel und die Chipkarte (2) einen dritten Kommunikationsprotokollstapel umfasst, was einerseits Kommunikationen ermöglicht zwischen der Benutzerstation (1) und einem entfernten Server (4), der mit dem besagten Netzwerk verbunden ist, und andererseits Kommunikationen zwischen der Benutzerstation (1) und der Chipkarte (2) über den Chipkartenleser (3), wobei die Benutzerstation (1) außerdem Mittel zum Generieren von Anfragen (10) besitzt, welche zum entfernten Server (4) übermittelt werden, **dadurch gekennzeichnet, dass** der entfernte Server (4) Speicherungsmittel (41, 42) besitzt zum Speichern von Daten und/oder Anweisungen für das Erstellen spezifischer Befehle nach Empfang spezifischer Anfragen aus den besagten Anfrage-Generiermitteln (10) und für das Übermitteln der besagten Befehle an die Benutzerstation (1), und dadurch, dass die Benutzerstation (1) ein zusätzliches, sogenanntes Spezialmodul (8) besitzt, das eine separate Schnittstelle eines "Web"-Browsers zwischen dem ersten und dem zweiten Protokollstapel bildet, wobei das zusätzliche Spezialmodul (8) derart angeordnet ist, dass es die von der Benutzerstation (1) empfangenden spezifischen Befehle vor der oberen Anwendungsschicht, die von einem Webbrowser gebildet ist, abfängt und die spezifischen Befehle gemäss einem ersten bestimmten Kommunikationsprotokoll in mit einem zweiten bestimmten Kommunikationsprotokoll konforme Befehle übersetzt, so dass sie gemäss dem zweiten bestimmten Kommunikationsprotokoll über den Chipkartenleser (3) an die Chipkarte (2) übermittelt werden, um mindestens eine bestimmte Funktion mindestens einer in dieser Chipkarte (2) gespeicherten Anwendung zu aktivieren.

16. Systemarchitektur nach Anspruch 15, **dadurch gekennzeichnet, dass** der entfernte Server (4) einen "HTTP" Server (40), erste Speicherungsmittel (42) zum Speichern der Daten und/oder Anweisungen für das Erstellen spezifischer Befehle und zweite Speicherungsmittel (41) für das Speichern von Daten, die die Anzeigeseiten in der "HTML" Sprache bilden, umfasst.

17. Systemarchitektur nach Anspruch 15, bei welcher das zusätzliche Spezialmodul (8) derart angeordnet ist, dass es eine Schnittstelle mit den oberen Protokollschichten der Benutzerstation (1) bildet und die in der Benutzerstation (1) empfangenen spezifischen Befehle an der oberen Schicht (C4), welche der Transportschicht TCP entspricht, abfängt.

18. Anwendung der Systemarchitektur gemäss Anspruch 15 auf die Realisierung eines Demonstrators für die Chipkarte (2), **dadurch gekennzeichnet, dass**:
- die Chipkarte (2) Daten, die einen Kontext der Chipkarte darstellen, zum entfernten Server (4) sendet;
- die von der Chipkarte (2) gesendeten Daten in der Benutzerstation (1) gemäss dem zweiten bestimmten Kommunikationsprotokoll empfangen und vom Zusatzmodul (8) übersetzt werden;
- die übersetzten Daten gemäss dem ersten bestimmten Kommunikationsprotokoll von der Benutzerstation (1) an den entfernten Server übermittelt werden;
- der entfernte Server (4) ausgehend von den übersetzten, von der Benutzerstation (1) übermittelten Daten charakteristische Daten eines Kontextes der Chipkarte (2) erstellt;
- der entfernte Server (4) die charakteristischen Daten gemäss einem dritten bestimmten Kommunikationsprotokoll an die Benutzerstation (1) übermittelt; und
- nach Empfang der charakteristischen Daten durch das Zusatzmodul (8) ein Visualisierungsbildschirm der Benutzerstation (1) die charakteristischen, vom entfernten Server (4) übermittelten Daten anzeigt.
